# EUROPÄISCHE PATENTSCHRIFT

(11) **EP 3 017 975 B1**
(45) Veröffentlichungstag und Bekanntmachung des Hinweises auf die Patenterteilung: **27.02.2019**
(21) Anmeldenummer: 15165903.4
(22) Anmeldetag: 30.04.2015
(51) Int. Cl.: B60G 7/00

(54) **QUERLENKER MIT KUGELGELENK IN EINPRESSVERBINDUNG**
TRANSVERSE CONTROL ARM WITH BALL JOINT IN PRESS-FIT CONNECTION
BRAS OSCILLANT TRANSVERSAL DOTÉ D'UNE ROTULE DANS UNE LIAISON INSÉRÉE EN FORCE

(30) Priorität: 05.11.2014 DE 102014222572
(43) Veröffentlichungstag der Anmeldung: 11.05.2016
(73) Patentinhaber: Ford Global Technologies, LLC, Dearborn, MI 48126 (US)
(72) Erfinder: Kurbel, Peter, 51491 Overath (DE); Meier, Christoph, 50859 Köln (DE)
(74) Vertreter: Illing, Rolf

(56) Entgegenhaltungen:
- EP-A1- 1 077 334
- EP-A2- 1 346 855
- US-A1- 2006 110 213
- US-A1- 2008 213 035
- US-A1- 2014 138 928
- US-A1- 2014 196 270
- US-B1- 8 757 648

## Beschreibung

Die vorliegende Erfindung betrifft einen Querlenker für eine Vorderradaufhängung eines Kraftfahrzeugs, wobei der Querlenker über ein Kugelgelenk in Einpressverbindung mit einem Radträger verbunden ist.

Radaufhängungen verbinden die Räder mit dem Fahrgestell oder der selbstragenden Karosserie eines Kraftfahrzeugs. Einzelradaufhängungen bestehen im Gegensatz zu Starrachsen aus separaten Radaufhängungen zu den beiden Seiten eines zweispurigen Kraftfahrzeugs, so dass sich die Radstellungen auf den beiden Seiten nicht gegenseitig beeinflussen. Typischerweise sind Radaufhängungen aus sogenannten Lenkern aufgebaut, welche die Räder am Fahrgestell oder Karosserie horizontal fixieren. Dabei sind Querlenker wesentliche Bestandteile von Radaufhängungen, besonders von Vorderradaufhängungen. Ein Querlenker ist quer zur Fahrtrichtung eingebaut. Eine typische Form ist ein einschaliger Dreiecksquerlenker, bei dem zwei Anbindungsarme über Gummilager mit der Karosserie und ein Anbindungsarm über ein Gelenk, typischerweise ein Kugelgelenk, mit einem Radträger eines Rades verbunden sind (DE602004006080T2).

Kugelgelenke übertragen und nehmen Kräfte aus mehreren Richtungen auf. Sie bestehen im Wesentlichen aus einem Gelenkzapfen, an dessen einem Ende eine Kugel ausgebildet ist, einer die Kugel des Zapfens aufnehmenden Schale und sowie einem die Schale und Teile des Kugelzapfens aufnehmenden Gelenkgehäuse. Die Kugel des Kugelzapfens gleitet in der vorgespannten, dauergeschmierten Schale, welche durch das Gehäuse gegen Feuchtigkeit und Verschmutzung geschützt ist (DE102005034210A1, DE102006002395A1).

Die Verbindung des Kugelgelenkgehäuses mit einem entsprechenden Anbindungsarm kann z. B. durch eine Einpressverbindung, eine Schweißverbindung, eine Schraubverbindung, eine Nietverbindung u. ä. umgesetzt werden.

Die Einpressverbindung ist dabei die kostengünstigste Variante. Die Verbindung zwischen Kugelgelenk und Querlenker wird dabei durch Kraftschluss bewirkt. Allerdings hat die Einpressverbindung den signifikanten Nachteil, dass sie im Vergleich mit anderen Verbindungsarten einen hohen räumlichen Bedarf hat. Der hohe räumliche Bedarf ist durch die große Materialdicke der Wandung des Einpresssitzes bedingt, und durch den dadurch bedingten großen Biegeradius des Materials. Typischerweise ist der Einpresssitz ein tiefgezogener Zylinder im Material des Lenkers. Durch den hohen räumlichen Bedarf muss das eingepresste Kugelgelenk zwangsläufig weiter innerhalb der Fahrzeugdimensionen angeordnet werden als bei anderen Methoden. Dies wiederum hat einen negativen Effekt auf das Lenkverhalten des Fahrzeugs, da der Lenkrollhalbmesser nicht optimal gestaltet werden kann. Ideal ist dabei eine möglichst nahe Anordnung der Einpressverbindung an Radträger und Bremsscheibe.

In der Patentschrift US 8,757,648 B1, die den Oberbegriff des Anspruchs 1 offenbart, wird eine Anordnung offenbart, in der an der Außenseite des Querlenkers in Richtung der Bremsscheibe die Materialdicke reduziert ist, um Bewegungsfreiheit zwischen dem Querlenker und der Bremsscheibe zu gewährleisten. In der Offenlegungsschrift DE 10 2013 200 406 A1 wird ein Verfahren zum Herstellen eines Querlenkers offenbart, bei dem in einem Endabschnitt eine Einrichtung zur Aufnahme eines Kugelgelenks ausgebildet wird.
Es besteht damit die Aufgabe, eine Einrichtung bereitzustellen, die unter Nutzung des im Vergleich zu anderen Verbindungsarten kostengünstigen Vorteils dabei einen günstigeren räumlichen Bedarf als herkömmliche Einpressverbindungen aufweist.
Diese Aufgabe wird durch ein Verfahren mit den Merkmalen des Hauptanspruchs gelöst. Weitere vorteilhafte Ausführungsformen der Erfindung ergeben sich aus den Neben- und Unteransprüchen, den Figuren und den Ausführungsbeispielen.
Ein erster Aspekt der Erfindung betrifft einen Querlenker eines Kraftfahrzeugs, der eine radseitige Struktur zu Ankoppeln eines Rades mit einer eine Öffnung aufweisenden Einrichtung zur Aufnahme eines Kugelgelenks in Einpressverbindung umfasst, bei dem das Material der Einrichtung in einem für einen kraftschlüssigen Kontakt mit dem Kugelgelenk vorgesehenen Bereich eine umformtechnisch hergestellte lokale Verstärkungsstruktur aufweist, die eine erhöhte Strukturfestigkeit gegenüber nicht derart umgeformten Material aufweist, und bei dem die Wandung der Einrichtung in einem zur Bremsscheibe des anzukoppelnden Rades gerichteten Bereich eine verringerte Materialdicke aufweist, und der Bereich mit verringerter Materialdicke durch eine Vertiefung der inneren Oberfläche der Wandung der Einrichtung in Bezug auf den übrigen Bereich der Wandung bei gleichmäßiger äußerer Oberfläche geformt ist.

Das Ausgangsmaterial des Querlenkers und damit auch der Einrichtung ist vorzugsweise ein Blech, d. h. ein flaches Werkstück aus Metall. Die Struktur des Querlenkers mit allen notwendigen Formen, darunter der Einrichtung zur Aufnahme des Kugelgelenks, wird herkömmlicherweise in einem Werkzeug, das für die Durchführung aller notwendigen Umformungsprozesse ausgebildet ist, erzeugt. Dabei wird das Material der Einrichtung einerseits in dem für den kraftschlüssigen Kontakt mit dem Kugelgelenk vorgesehenen Bereich verstärkt, weiterhin aber in einem zur Bremsscheibe des anzukoppelnden Rades gerichteten Bereich ausgedünnt, d. h. die Dicke des Materials ist an dieser Stelle verringert. Dabei ist die Reduktion vorteilhaft, weil die Einpressverbindung somit räumlich näher an die Bremsscheibe angeordnet werden kann als herkömmliche Einpressverbindungen. Dadurch kann vorteilhafterweise das Fahrverhalten entsprechender Kraftfahrzeuge positiv beeinflusst werden. Die Reduktion des verstärkten Materials ist dabei kein Widerspruch, weil durch beim Herstellen der Einrichtung durchgeführten Umformprozesse das Material in diesem Bereich eine erhöhte Strukturfestigkeit gegenüber nicht derart umgeformten Material aufweist. Mit anderen Worten ist das Material durch die Ausbildung einer Vertiefung im inneren Bereich so reduziert, dass vorteilhaft eine nähere räumliche Anordnung der Einrichtung und damit der Verbindung von Querlenker und Rad des entsprechenden Kraftfahrzeugs an der Bremsscheibe des Rades ermöglicht wird.

Vorzugsweise ist bei dem Querlenker der für den kraftschlüssigen Kontakt mit dem Kugelgelenk vorgesehene Bereich die Öffnung der Einrichtung. Dabei ist das Material bevorzugt im Bereich der Öffnung der Einrichtung durch Verformung verstärkt, und vorteilhafterweise in Richtung der Bremsscheibe des anzukoppelnden Rades ausgedünnt.

Vorzugsweise ist das Material der Einrichtung im Bereich der Verstärkungsstruktur verdichtet. Dabei ist unter Verdichtung auch eine Verfestigung des Materials in dem für den kraftschlüssigen Kontakt mit dem
Kugelgelenk vorgesehenen Bereich zu verstehen. Diese Verdichtung oder Verfestigung des Materials ist durch einen Druck bewirkbar, der in diesem Bereich auf das Material ausgeübt wird, beispielsweise durch Pressformen.

Vorteilhafterweise ist der Druck zur Umformung und damit zur Verfestigung des Materials in dem für den kraftschlüssigen Kontakt mit dem Kugelgelenk vorgesehene Bereich der Einrichtung durch eine Stauchung bewirkbar. Deshalb ist das Material im Bereich der Verstärkungsstruktur der Einrichtung bevorzugt gestaucht.

Weiterhin ist der erfindungsgemäße Querlenker vorzugsweise einschalig. Einschalige Querlenker sind vorteilhafterweise einfach und kostengünstig herstellbar, und zeichnen sich durch ein geringes Gewicht aus.

Weiterhin ist der erfindungsgemäße Querlenker zusammen mit der Einrichtung vorzugsweise als einstückiges Blechelement ausgebildet. Dazu liegt das Material des gesamten Querlenkers vor dem Umformen aus einer Blechplatine geschnitten, bevorzugt ausgestanzt, vor. In einer anderen möglichen Ausführungsform sind Querlenker und Einrichtung separat hergestellt. Die Einrichtung wird dann nach der Herstellung mit dem Querlenker verbunden, z. B. durch Nieten oder Schrauben.

Das Kugelgelenk ist mit seinem Gehäuse von den Strukturen der Einrichtung so umschlossen, dass es fest durch Form- und Kraftschluss mit dem Querlenker verbunden ist. Über das eingepresste Kugellager ist der Querlenker mit einem Radlager eines Kraftfahrzeugs verbindbar.

Ein zweiter Aspekt der Erfindung bezieht sich auf ein Kraftfahrzeug mit einem erfindungsgemäßen Querlenker. Das erfindungsgemäße Kraftfahrzeug umfasst also einen Querlenker, der eine radseitige Struktur zu Ankoppeln eines Rades mit einer eine Öffnung aufweisenden Einrichtung zur Aufnahme eines Kugelgelenks umfasst, bei dem das Material der Einrichtung in einem für einen kraftschlüssigen Kontakt mit dem Kugelgelenk vorgesehenen Bereich eine umformtechnisch hergestellte lokale Verstärkungsstruktur
aufweist, und bei dem die Wandung der Einrichtung in einem zur Bremsscheibe des anzukoppelnden Rades gerichteten Bereich eine Reduktion des Materials aufweist.

Ein dritter Aspekt der Erfindung bezieht sich auf ein Verfahren zum Herstellen eines erfindungsgemäßen Querlenkers, umfassend die Schritte
- Bereitstellen eines Blechs als Ausgangsmaterial,
- Bereitstellen eines Werkzeugs zum Schneiden und Umformen des Blechs,
- Schneiden eines der Grundform des Querlenkers entsprechenden Form aus dem Blech,
- Umformen des ausgeschnittenen Blechs zu einem Querlenker mit allen Lenkerelementen, umfassend eine Einrichtung zur Aufnahme eines Kugelgelenks in Einpressverbindung, wobei in einem für einen kraftschlüssigen Kontakt mit dem Kugelgelenk vorgesehenen Bereich der Einrichtung durch zusätzliches Umformen eine lokale Verstärkungsstruktur hergestellt wird,
wobei das Verfahren weiterhin dadurch charakterisiert ist, dass in dem zur Bremsscheibe des anzukoppelnden Rades gerichteten Bereich Wandung der Einrichtung durch zusätzliches Umformen eine Reduktion der Materialdicke des Blechs durch Formen einer Vertiefung in Bezug auf benachbarte Bereiche in der inneren Oberfläche der Wandung erzeugt wird. Die Vorteile des Verfahrens entsprechen dabei denen des erfindungsgemäßen Querlenkers. Vorteilhaft ist darüber hinaus, dass durch die Erzeugung der lokalen Verstärkungsstruktur dem Material in diesem Bereich eine erhöhte Strukturfestigkeit gegenüber nicht derart umgeformtem Material verliehen wird. Dadurch ist auch eine Reduktion an einer Stelle möglich, ohne dass die strukturelle Integrität unter Belastung, konkret durch Einpressen eines Kugelgelenks, verloren geht.

Das Ausgangsmaterial des Querlenkers und damit auch der Einrichtung ist vorzugsweise ein Blech, d. h. ein flaches Werkstück aus Metall. Das Ausgangsmaterial wird dabei als ein sogenanntes Blechcoil bereitgestellt, auf der das Blech aufgewickelt ist. Von dem Blechcoil wird Blech abgewickelt und in dem bereitgestellten Werkzeugaus dem Blech eine der Grundform des Querlenkers entsprechende Form, ein sogenannter Rohling, geschnitten.

Bevorzugt wird der Rohling aus dem Blech ausgestanzt. Die Lenkerelemente des Querlenkers sind dabei alle Element, die ein Lenker, besonders ein Querlenker, typischerweise aufweist, z. B. Spurstangen, Tragarme, Befestigungsvorrichtungen u.a. Der Querlenker und die Einrichtung werden in dem erfindungsgemäßen Verfahren vorzugsweise als einstückiges Blechelement hergestellt.

Querlenker und Einrichtung können auch separat hergestellt werden. Die Einrichtung und der Querlenker werden dann nach der Herstellung miteinander verbunden, z. B. durch Nieten oder Schrauben. Dabei wird für Querlenker und Einrichtung vorzugsweise das gleiche Material verwendet.

Das bereitgestellte Werkzeug ist für die Durchführung aller notwendigen Umformprozesse, und damit zur Herstellung aller Strukturen des Querlenkers ausgebildet. Die Struktur des Querlenkers mit allen notwendigen Formen, darunter der Einrichtung zur Aufnahme des Kugelgelenks, kann damit in dem Werkzeug hergestellt werden. Das Werkzeug ist vorteilhafterweise ausgebildet, die Strukturen des Querlenkers und der Einrichtung und besonders der Verstärkungsstrukturen der Einrichtung in dem für den kraftschlüssigen Kontakt mit dem Kugelgelenk vorgesehenen Bereich und die Reduktion der Wandung der Einrichtung in dem zur Bremsscheibe eines anzukoppelnden Rades durch Umformen durch Stanzen herzustellen. Das Werkzeug ist vorteilhafterweise ein Blechwerkzeug oder auch Transferwerkzeug für die Ausführung weiterer Umformmethoden. Für die Umformprozesse werden Methoden der Kaltumformung bevorzugt, es kann aber auch zusätzlich Wärme zugeführt werden. Werden Querlenker und Einrichtung als zwei Teile hergestellt, die nach der Herstellung miteinander verbunden werden, ist dafür ebenfalls jeweils ein entsprechendes Werkzeug vorgesehen.

Die Reduktion bzw. Vertiefung wird vorzugsweise durch Stanzen hergestellt. Stanzen eignet sich vorteilhaft zum Erzeugen der Vertiefung, weil durch die dabei entstehende Wirkung auf das Blech Material von einem Bereich in einen anderen verschoben werden kann, in
vorliegender Anmeldung idealerweise aus dem Bereich der zu erzeugenden Vertiefung in andere Bereiche der Einrichtung, besonders der Verstärkungsstruktur, und auch aus benachbarten Bereichen der Verstärkungsstruktur in den Bereich der Verstärkungsstruktur.
Weiterhin werden in dem Verfahren vorteilhafterweise in einem zusätzlichen Schritt die in radialer Richtung innen und außen von der lokalen Verstärkungsstruktur liegenden Bereiche der Einrichtung entfernt. Dadurch kann vorteilhaft die Öffnung der Einrichtung erzeugt werden, z.B. durch Stanzen, bzw. können vorteilhaft unerwünschte Randbereiche der Einrichtung entfernt werden, die den Außenradius der Einrichtung nachteilig vergrößern und nicht für die Funktion des Querlenkers benötigt werden.

Die Erfindung wird anhand der Figuren näher beschrieben. Es zeigen:
- Figur 1: eine Querschittsansicht einer beispielhaften Ausführungsform eines erfindungsgemäßen Querlenkers mit einem eingepressten Kugelgelenk in einer Einrichtung zur Aufnahme des Kugelgelenks.
- Figur 2: eine angeschnittene Ansicht der Einrichtung gemäß Fig. 1.
- Figur 3: ein Fließdiagramm einer beispielhaften Ausführungsform des erfindungsgemäßen Verfahrens.

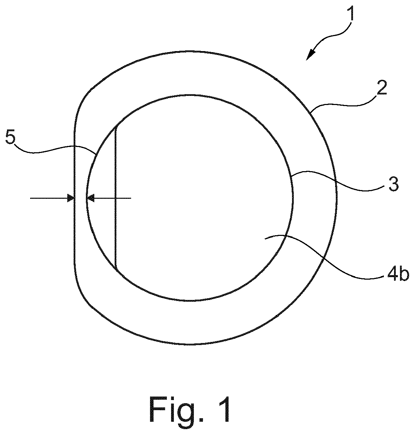

In Fig. 1 ist eine Einrichtung 1 eines Querlenkers eines Kraftfahrzeugs zur Aufnahme eines Kugelgelenks dargestellt, die eine äußere Oberfläche 2 und eine innere Oberfläche 3 aufweist. In die Einrichtung 1 ist ein Kugelgelenk 4 eingepresst, dessen Gelenkkugel 4b in Kontakt mit der inneren Oberfläche 3 steht. In einem zur Bremsscheibe eines anzukoppelnden Rades gerichteten Bereich weist die Einrichtung eine Reduktion 5 des Materials auf. Die Reduktion 5 ist als Vertiefung der inneren Oberfläche 3 ausgeführt, so dass das aufgenommene Kugelgelenk 4 räumlich möglichst nahe an der Bremsscheibe angeordnet werden kann. Die Reduktion 5 hat dabei etwa die Form eines D.

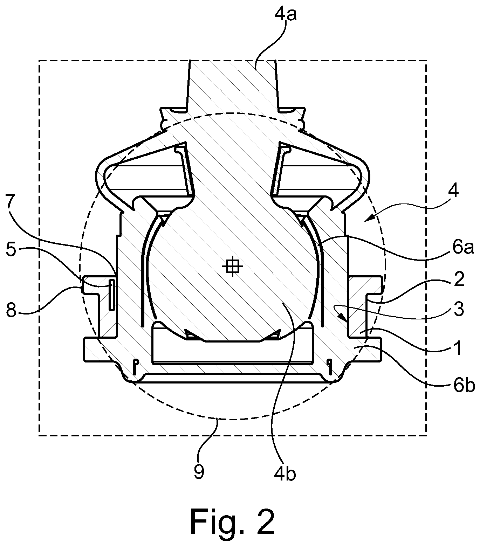

In der Darstellung von Fig. 2 ist ein Kugelgelenk 4 mit Gelenkzapfen 4a, Kugel 4b, Kugelschale 6a und Gehäuse des Kugelgelenks 6b in eine Öffnung 7 einer Einrichtung 1 eines Querlenkers eines Kraftfahrzeugs zum Aufnehmen des Kugelgelenks 4 eingepresst. Dabei ist die Einrichtung 1 eine tiefgezogene Röhre, die im für den kraftschlüssigen Kontakt mit dem Kugelgelenk 4 vorgesehenen Bereich an der Öffnung 7 der Einrichtung 1 die Verstärkungsstruktur 8 aufweist. Die Verstärkungsstruktur 8 kann auch in einem anderen Bereich als der Öffnung der Einrichtung 1 angeordnet sein, wenn ein kraftschlüssiger Kontakt mit dem Kugelgelenk 4 in diesem entsprechenden Bereich vorgesehen ist. Im Bereich der Verstärkungsstruktur 8 befindet sich die Reduktion 5 des Materials. Die Reduktion 5 kann aus dem Bereich der Verstärkungsstruktur 8 in andere Bereiche der Einrichtung hineinreichen. Der Kreis 9 deutet dabei den Radius an, den die Einrichtung 1 mit dem eingepressten Kugelgelenk 4 hat.

Dabei sind sämtliche Strukturen des Querlenkers einschließlich der Einrichtung 1 aus einer einzigen Blechplatine hergestellt. Das Material des Querlenkers ist dazu aus der Blechplatine ausgestanzt. Alternativ können Querlenker und Einrichtung 1 auch separat hergestellt werden und dann miteinander verbunden werden, beispielsweise durch Nieten oder Schrauben. Die Strukturen des Querlenkers und der Einrichtung 1 und besonders der Verstärkungsstruktur 8 und der Reduktion 5 in dem für den kraftschlüssigen Kontakt mit dem Kugelgelenk 4 vorgesehenen Bereich beruhen vorzugsweise auf Umformen durch Stanzen, können aber auch durch weitere Umformmethoden wie beispielsweise Biegen, Fließpressen, Durchdrücken, Durchziehen, Tiefziehen oder Kragenziehen hergestellt werden. Die genannten Methoden können auch miteinander kombiniert werden. Dabei sind die Umformmethoden in einem dafür vorgesehenen Werkzeug, besonders einem Blechwerkzeug, durchführbar.

Die Maße, Konturen und die Dicke der Verstärkungsstruktur 8 und der Reduktion 5 variieren mit der konkreten Form des Lenkers und dessen Einbaulage im Kraftfahrzeug. Deshalb können erfindungsgemäße Querlenker hinsichtlich der genannten Parameter von den in den Figuren gezeigten Darstellungen abweichen.

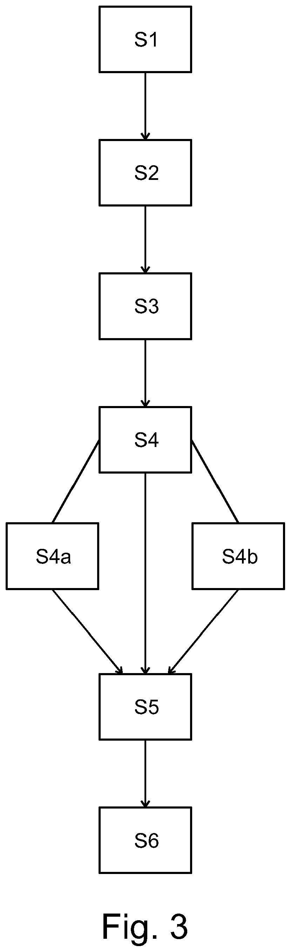

In einer beispielhaften Ausführungsform des Verfahrens wird gemäß der Darstellung in Fig. 3 in Schritt S1 eine Blechplatine als Ausgangsmaterial bereitgestellt. In Schritt S2 wird eine der Grundform des herzustellenden Querlenkers entsprechende Form aus dem Blech ausgeschnitten. Dabei werden die Dimensionen des auszuschneidenden Rohlings so bemessen, dass alle umzuformenden und nicht umzuformenden Bereiche des Querlenkers in dieser Form erfasst sind. Der Rohling wird aus der Blechplatine bevorzugt durch Stanzen ausgeschnitten.

In einem weiteren Schritt S3 wird ein Werkzeug zum Umformen des ausgeschnittenen Blechs bereitgestellt. Das Werkzeug ist bevorzugt zum Stanzen ausgebildet, aber auch für andere Umformmethoden, beispielsweise Biegen, Fließpressen, Durchdrücken, Durchziehen, Tiefziehen und Kragenziehen. Dabei sind die genannten Methoden und auch weitere Methoden miteinander kombinierbar.

In Schritt S4 wird der Rohling bzw. das Blech in dem Werkzeug zu einem Querlenker mit allen Lenkerelementen mit einer Einrichtung 1 zur Aufnahme eines Kugelgelenks 4 umgeformt. In Schritt S4a wird in dem für den kraftschlüssigen Kontakt mit dem Kugelgelenk 4 vorgesehenen Bereich der Einrichtung 1 durch zusätzliches Umformen eine lokale Verstärkungsstruktur 8 hergestellt. In Schritt 4b wird in dem zur Bremsscheibe des anzukoppelnden Rades gerichteten Bereich in der Wandung der Einrichtung 1, durch zusätzliches Umformen eine Reduktion 5 hergestellt. Die Reduktion wird dabei in der inneren Oberfläche der Wandung der Einrichtung erzeugt. Dabei können die Schritt S4a und S4b zeitgleich mit Schritt S4 und auch zeitgleich miteinander durchgeführt werden. Es ist jedoch sinnvoll, wenn die Grundform der Einrichtung 1 zur Aufnahme des Kugelgelenks 4 bereits erzeugt ist, bevor die Verstärkungsstruktur 8 und die Reduktion 5 erzeugt wird.
In Schritt S5 wird das in radialer Richtung innen von der Verstärkungsstruktur 8 angeordnete und bei der Herstellung der Verstärkungsstruktur 8 ausgedünnte Material der Einrichtung 1 ausgestanzt und damit die Öffnung der Einrichtung 2 erzeugt. In Schritt S6 wird das in radialer Richtung außerhalb der Verstärkungsstruktur 8 bei der Herstellung der Verstärkungsstruktur 8 ausgedünnte Material ausgestanzt.

### Bezugszeichenliste

- 1: = Einrichtung
- 2: = äußere Oberfläche der Einrichtung
- 3: = innere Oberfläche der Einrichtung
- 4: = Kugelgelenk
- 4a: = Zapfen des Kugelgelenks
- 4b: = Kugel des Kugelgelenks
- 5: = Reduktion
- 6a: = Kugelschale
- 6b: = Gehäuse des Kugelgelenks
- 7: = Öffnung der Einrichtung
- 8: = Verstärkungsstruktur
- 9: = Außendimension der Einpressverbindung

## Patentansprüche

1. Querlenker eines Kraftfahrzeugs, umfassend eine radseitige Struktur zu Ankoppeln eines Rades mit einer eine Öffnung (2) aufweisenden Einrichtung (1) zur Aufnahme eines Kugelgelenks (4) in Einpressverbindung, **dadurch gekennzeichnet, dass** das Material der Einrichtung (1) in einem für einen kraftschlüssigen Kontakt mit
dem Kugelgelenk (4) vorgesehenen Bereich, eine umformtechnisch hergestellte lokale Verstärkungsstruktur (3) aufweist, die eine erhöhte Strukturfestigkeit gegenüber nicht derart umgeformten Material aufweist, wobei die Wandung der Einrichtung in einem zur Bremsscheibe des anzukoppelnden Rades gerichteten Bereich eine verringerte Materialdicke (5) aufweist, und der Bereich mit verringerter Materialdicke (5) durch eine Vertiefung der inneren Oberfläche der Wandung der Einrichtung in Bezug auf den übrigen Bereich der Wandung bei gleichmäßiger äußerer Oberfläche geformt ist.

2. Querlenker nach Anspruch 1, bei dem der für den kraftschlüssigen Kontakt mit dem Kugelgelenk (4) vorgesehene Bereich die Öffnung (2) der Einrichtung (1) ist.

3. Querlenker nach einem der vorherigen Ansprüche, bei dem im Bereich der Verstärkungsstruktur (3) das Material der Einrichtung (1) verdichtet ist.

4. Querlenker nach einem der vorherigen Ansprüche, bei dem im Bereich der Verstärkungsstruktur (3) das Material der Einrichtung (1) gestaucht ist.

5. Querlenker nach einem der vorherigen Ansprüche, wobei der Querlenker einschalig ist.

6. Querlenker nach einem der vorherigen Ansprüche, bei dem die Einrichtung (1) als einstückiges Blechelement mit dem Querlenker ausgebildet ist.

7. Querlenker nach einem der vorherigen Ansprüche, bei dem der Querlenker aus einer Blechplatine ausgestanzt ist.

8. Kraftfahrzeug mit einem Querlenker nach einem der Ansprüche 1 - 7.

9. Verfahren zum Herstellen eines Querlenkers nach einem der Ansprüche 1 - 7, umfassend die Schritte
- Bereitstellen eines Blechs als Ausgangsmaterial,
- Bereitstellen eines Werkzeugs zum Schneiden und Umformen des Blechs,
- Schneiden eines der Grundform des Querlenkers entsprechenden Form aus dem Blech,
- Umformen des ausgeschnittenen Blechs zu einem Querlenker mit allen Lenkerelementen, umfassend eine Einrichtung zur Aufnahme eines Kugelgelenks in Einpressverbindung, wobei in einem für einen kraftschlüssigen Kontakt mit dem Kugelgelenk vorgesehenen Bereich der Einrichtung durch zusätzliches Umformen eine lokale Verstärkungsstruktur hergestellt wird,
weiterhin dadurch charakterisiert, dass
in dem zur Bremsscheibe des anzukoppelnden Rades gerichteten Bereich Wandung der Einrichtung durch zusätzliches Umformen eine Reduktion der Materialdicke des Blechs durch Formen einer Vertiefung in Bezug auf benachbarte Bereiche in der inneren Oberfläche der Wandung erzeugt wird.

10. Verfahren nach Anspruch 9, zusätzlich charakterisiert durch Entfernen der in radialer Richtung innen und außen von der lokalen Verstärkungsstruktur liegenden Bereiche der Einrichtung.

## Claims

1. Transverse link of a motor vehicle, comprising a wheel-side structure for the coupling-on of a wheel, having a device (1), which has an opening (2), for receiving a ball joint (4) in a press-fit connection, **characterized in that** the material of the device (1) has, in a region which is provided for non-positive contact with the ball joint (4), a local reinforcement structure (3) which is produced by deformation and has greater structural strength in relation to material which has not been deformed in this way,
wherein
the wall of the device, in a region which is directed towards the brake disc of the wheel to be coupled on, has a reduced material thickness (5), and the region of reduced material thickness (5) is formed by a depression in the inner surface of the wall of the device in relation to the remaining region of the wall in the case of a uniform outer surface.

2. Transverse link according to Claim 1, in which the region which is provided for the non-positive contact with the ball joint (4) is the opening (2) of the device (1).

3. Transverse link according to either of the preceding claims, in which the material of the device (1) is compressed in the region of the reinforcement structure (3) .

4. Transverse link according to one of the preceding claims, in which the material of the device (1) is upset in the region of the reinforcement structure (3).

5. Transverse link according to one of the preceding claims, wherein the transverse link is of single-shell form.

6. Transverse link according to one of the preceding claims, in which the device (1) is formed together with the transverse link as a unipartite sheet-metal element.

7. Transverse link according to one of the preceding claims, in which the transverse link is punched out of a sheet-metal plate.

8. Motor vehicle having a transverse link according to one of Claims 1-7.

9. Method for producing a transverse link according to one of Claims 1-7, comprising the steps of:
- providing a metal sheet as starting material,
- providing a tool for cutting and deforming the metal sheet,
- cutting a shape which corresponds to the basic shape of the transverse link out of the metal sheet,
- deforming the cut-out metal sheet to form a transverse link with all link elements, comprising a device for receiving a ball joint in a press-fit connection, wherein a local reinforcement structure is produced by additional deformation in a region of the device which is provided for non-positive contact with the ball joint,
further **characterized in that**,
in the region of the wall of the device which is directed towards the brake disc of the wheel to be coupled on, a reduction in the material thickness of the metal sheet is produced by additional deformation by forming a depression in relation to adjacent regions in the inner surface of the wall.

10. Method according to Claim 9, additionally **characterized by** removing the regions of the device which are situated to the inside and to the outside of the local reinforcement structure in the radial direction.

## Revendications

1. Bras oscillant transversal d'un véhicule automobile, comportant une structure côté roue servant à accoupler une roue à un dispositif (1) comprenant une ouverture (2), lequel dispositif est destiné à recevoir une articulation à rotule (4) dans une liaison insérée à force, **caractérisé en ce que** le matériau du dispositif (1) comprend, dans une zone prévue pour un contact à force avec l'articulation à rotule (4), une structure de renforcement locale (3) fabriquée suivant une technique de déformation, laquelle structure de renforcement présente une résistance structurale accrue par rapport au matériau non déformé de la sorte, la paroi du dispositif présentant, dans une zone orientée vers le disque de frein de la roue à accoupler, une épaisseur de matériau réduite (5), et la zone d'épaisseur de matériau réduite (5) étant formée par un renfoncement de la surface intérieure de la paroi du dispositif par rapport à la zone restante de la paroi en cas de surface extérieure uniforme.

2. Bras oscillant transversal selon la revendication 1, dans lequel la zone prévue pour le contact à force avec l'articulation à rotule (4) est l'ouverture (2) du dispositif (1).

3. Bras oscillant transversal selon l'une quelconque des revendications précédentes, dans lequel le matériau du dispositif (1) est comprimé dans la zone de la structure de renforcement (3).

4. Bras oscillant transversal selon l'une quelconque des revendications précédentes, dans lequel le matériau du dispositif (1) est refoulé dans la zone de la structure de renforcement (3).

5. Bras oscillant transversal selon l'une quelconque des revendications précédentes, le bras oscillant transversal étant à simple paroi.

6. Bras oscillant transversal selon l'une quelconque des revendications précédentes, dans lequel le dispositif (1) est réalisé sous forme d'élément en tôle d'un seul tenant avec le bras oscillant transversal.

7. Bras oscillant transversal selon l'une quelconque des revendications précédentes, dans lequel le bras oscillant transversal est estampé à partir d'une plaque de tôle.

8. Véhicule automobile comprenant un bras oscillant transversal selon l'une quelconque des revendications 1 à 7.

9. Procédé de fabrication d'un bras oscillant transversal selon l'une quelconque des revendications 1 à 7, comportant les étapes consistant à
- fournir une tôle en tant que matériau de départ,
- fournir un outil servant à découper et à déformer la tôle,
- découper dans la tôle une forme correspondant à la forme de base du bras oscillant transversal,
- déformer la tôle découpée pour obtenir un bras oscillant transversal doté de tous les éléments de bras oscillant, comportant un dispositif destiné à recevoir une articulation à rotule dans une liaison insérée à force, une structure de renforcement locale étant fabriquée par déformation supplémentaire dans une zone du dispositif prévue pour un contact à force avec l'articulation à rotule,
**caractérisé en outre en ce que**,
dans la zone de la paroi du dispositif orientée vers le disque de frein de la roue à accoupler, une réduction de l'épaisseur de matériau de la tôle est obtenue par déformation supplémentaire en formant un renfoncement par rapport à des zones adjacentes dans la surface intérieure de la paroi.

10. Procédé selon la revendication 9, **caractérisé en outre par** l'enlèvement des zones du dispositif situées intérieurement et extérieurement par rapport à la structure de renforcement locale dans la direction radiale.
